# EUROPÄISCHE PATENTANMELDUNG

(11) **EP 1 757 432 A2**
(43) Veröffentlichungstag der Anmeldung: **28.02.2007**
(21) Anmeldenummer: 06017473.7
(22) Anmeldetag: 22.08.2006
(51) Int. Cl.: B29C 70/12, B29C 70/50

(54) **Glasfaservliese, mit Glasfaservlies verstärkte Harzmatten sowie Verfahren zu deren Herstellung**

(30) Priorität: 23.08.2005 DE 102005039709
(71) Anmelder: Johns Manville, Denver CO 80202 (US)
(72) Erfinder: D'Silva, Sean, 61350 Bad Homburg (DE); Stehlin, F. Thomas, 65830 Kriftel (DE)
(74) Vertreter: Luderschmidt, Schüler & Partner

(57) **Zusammenfassung**

Die vorliegende Erfindung betrifft Glasfaservlies umfassend geschnittene Glasfasern, wobei das Glasfaservlies eine Inhomogenität von 10% oder weniger, einFlächengewicht von 600g/m2 oder höher und eine Festigkeit von mindestens 10 N aufweist. Des Weiteren beschreibt die vorliegende Erfindung Harzmatten, die die erfindungsgemäßen Glasfaservliese umfassen.

## Beschreibung

Die vorliegende Erfindung betrifft Glasfaservliese, Harzmatten sowie Verfahren zu deren Herstellung.

Harzmatten, insbesondere Sheet Moulding Compounds (SMC) werden seit langem in der Technik eingesetzt. Somit ist auch die Herstellung von SMC und die Weiterverarbeitung zu Bauteilen schon seit längerer Zeit bekannt. Beim üblichen SMC Herstellprozess wird auf eine Folie zunächst eine Lage eines Harzes aufgebracht. Auf diese Harzschicht werden dann im nächsten Schritt Schnittfasern aus Verstärkungsmaterialien - zumeist Glasfasern - aufgebracht. Die Schnittfasern werden inline erzeugt, indem eine größere Anzahl von so genannten Glasfaserrovings zugeführt und mit Hilfe von Choppern geschnitten werden. Eine weitere Harzschicht und eine weitere Folie vervollständigen den SMC-Herstellprozess.

Nach Herstellung des SMC ist eine Reifung von einigen Tagen notwendig. In dieser Zeit finden chemische Reaktionen statt, die die Viskosität des Harzes verändern und eine weitere Durchtränkung der Fasserschicht fördern. Beim nachfolgenden Pressvorgang findet dann aufgrund der wirkenden Scherkräfte eine partielle Auflösung der Faserbündelstruktur statt.

Bevorzugte SMCs weisen eine hohe Fließfähigkeit auf, die es z.B. ermöglicht, dass die Pressform nur zu 30 bis 50 % abgedeckt werden muss. Hinzu kommt die erreichbare Oberflächengüte, die bis zu Class-A Niveaus möglich sind. Harzmatten, die ein Gewebe oder ein Faservlies aus kontinuierlichen Fasern umfassen, weisen vielfach eine reduziert Fliessfähigkeit auf. Dementsprechend müssen derartige Harzmatten mit hoher Genauigkeit in die Pressform eingebracht werden. Des Weiteren kann die Oberflächenqualität der hergestellten Formteile nachteilig durch derartige Verstärkungsmatten beeinflusst werden.

Die dargestellte SMC-Herstellung mit Schnittfasern ist in der Regel ein relativ komplexer und langsamer Prozess. Wie beschrieben werden hierfür im Allgemeinen geschnittene Glasfasern eingesetzt, die vor Ort aus so genannten Rovings hergestellt werden. Dadurch wird eine große Anzahl an Spulen (bobbins), Zufiihrausrüstung und anderen Vorrichtungen benötigt, die erheblichen Arbeitsaufwand erfordern und sehr leicht zu technischen Problemen führen können. Dadurch entstehen unmittelbar Qualitäts- und Ausbeuteproblems, z.B. durch einen Stillstand der Maschinen, die vielfach erhebliche Kosten verursachen. Des Weiteren begrenzt das Schneiden der Fasern die Geschwindigkeit der SMC-Herstellung.

In WO99/55521 wird versucht, in einem inline-Prozesses eine Glasfaserschicht mittels eines Nasslegeverfahrens zu erzeugen. Dieses Verfahren ist aufwändig und erfordert wegen der erforderlichen Trocknung umfangreiche zusätzliche Maßnahmen. Des Weiteren werden wesentliche Eigenschaften der Glasfaservliese nicht beschrieben.

Die WO01/19599 beschreibt ein Verfahren, bei dem im SMC-Prozess eine Schicht aus unidirectionalen Verstärkungsfasern eingelegt werden, die zusätzlich noch mit Schnittfasern belegt werden. Dieses Verfahren ist insbesondere für Anwendungen geeignet, die besondere Festigkeitserfordernisse in einer Vorzugsrichtung berücksichtigt. Des Weiteren werden wesentliche Eigenschaften der Glasfaservliese nicht beschrieben.

Die WO2005/054559 schließlich beschreibt eine Methode zur Herstellung von genadelten Glasfasermatten, die dann auch für SMC-ähnliche Komponenten eingesetzt werden können. Die Vernadelung einer Matte stellt jedoch einen zusätzlichen und aufwändigen Prozessschritt dar. Des Weiteren werden wesentliche Eigenschaften der Glasfaservliese nicht beschrieben. So führt eine Vernadelung insbesondere zu einer u.U. sehr dauerhaften Verfestigung der Vliese. Daher ist die Fliesfähigkeit der aus diesen Glasfasermatten hergestellten Harzmatten relativ gering.

Das Dokument US2005/0082721 beschreibt Matten, die Glasfasern und Kunststofffasern aufweisen. Jedoch sind in diesem Dokument keine Hinweise auf Reaktionsharze enthalten. Des Weiteren werden wesentliche Eigenschaften der Matten nicht beschrieben.

Insgesamt bleibt festzuhalten, dass die derzeitigen Harzmatten mit Schnittfasern vielfach den vorgegebenen Zweck erfüllen. Allerdings ist die Herstellung dieser Harzmatten teuer, komplex und anfällig für Fehler

Aufgabe war es somit, ein Verfahren anzugeben, durch welches Harzmatten kostengünstig und sicher hergestellt werden können. Die so erhaltenen Harzmatten sollten zu Formteilen mit einer hohen Oberflächenqualität verarbeitet werden können. Des weiteren sollten die Harzmatten eine ausreichende Festigkeit aufweisen.

Darüber hinaus sollten die Harzmatten einfach verarbeitet werden können, wobei die Harzmatten eine hohe Fließfähigkeit aufweisen sollten.

Gelöst werden diese sowie weitere nicht explizit genannte Aufgaben, die jedoch aus den hierin einleitend diskutierten Zusammenhängen ohne weiteres ableitbar oder erschließbar sind, durch Glasvliese mit allen Merkmalen des Patentanspruchs 1. Zweckmäßige Abwandlungen der erfindungsgemäßen Glasvliese werden in den auf Anspruch 1 rückbezogenen Unteransprüchen unter Schutz gestellt.

Hinsichtlich der Harzmatten bietet Anspruch 10 eine Lösung der zugrundeliegenden Aufgabe. Verfahren zur Herstellung der erfindungsgemäßen Glasfaservliese sind Gegenstand des Anspruchs 15.

Gegenstand der vorliegenden Erfindung sind dementsprechend Glasfaservliese umfassend geschnittene Glasfasern, dadurch gekennzeichnet, dass das Glasfaservlies eine Inhomogenität von höchstens 10%, ein Flächengewicht von mindestens 600g/m2 und eine Festigkeit von mindestens 10N aufweist.

Die erfindungsgemäßen Glasfaservliese stellen wertvolle Zwischenprodukte zur Herstellung von Harzmatten dar. Dementsprechend sind auch Harzmatten umfassend die erfindungsgemäßen Glasfaservliese Gegenstand der vorliegenden Erfindung.

### Durch die vorliegende Erfindung werden insbesondere folgende Vorteile erzielt:

Die erfindungsgemäßen Glasfaservliese ermöglichen eine kostengünstige Herstellung von Harzmatten, insbesondere von Prepregs und/oder Sheet Moulding Compounds (SMC). So kann insbesondere auf das Schneiden von Glasfasern während des Herstellungsprozesses der Harzmatten verzichtet werden. Hierdurch kann der Prozess zur Herstellung der Harzmatten vereinfacht werden. Dementsprechend werden Kostenvorteile erzielt.

Die durch Härten der Harzmatten erhaltenen Formkörper zeigen eine hohe Festigkeit sowie eine hohe Oberflächenqualität.

Die durch Einsatz der Glasfaservliese der vorliegenden Erfindung erhältlichen Harzmatten können auf bekannte Weise verarbeitet werden. Hierbei zeigen diese Harzmatten eine hohe Fließfähigkeit, wobei die Pressform zu einem relativ geringen Teil abgedeckt werden muss. Die Festigkeit und Steifigkeit kann je nach Verstärkungsfasermaterial in einem weiten Spektrum variiert werden.

Die Herstellung der Harzmatten kann in einem quasi geschlossenen Prozess erfolgen. Dieser Vorteil ergibt sich insbesondere aus dem im Vergleich zur konventionellen Herstellung über geschnittene Glasfasern geringen Raumbedarf, den die Rollen aufweisen, von denen die Glasfaservliese abgerollt werden. Hierdurch kann die Freisetzung von potenziell gefährlichen Chemikalien in die Umwelt stark reduziert werden.

Durch die erfindungsgemäßen Glasfaservliese kann überraschend auf teure und empfindliche Einrichtungen zum Schneiden der Glasfasern verzichtet werden. Hierzu zählen auch alle zusätzlichen Bauteile und Vorrichtungen, wie zum Beispiel Rovingzuführungen, Creels, Überwachungseinrichtungen, etc, die aufgrund der großen Anzahl der zuzuführenden Rovings zu erheblichen Kosten führen. Hierdurch können die Kosten zur Herstellung der Harzmatten verringert werden. Darüber hinaus kann die Qualität der Harzmatten, insbesondere die Konstanz der Qualität verbessert werden.

Die erfindungsgemäßen Glasfaservliese umfassen Glasfasern. Glasfasern zur Herstellung von Harzmatten sind an sich weithin bekannt und werden seit langem eingesetzt. Geeignete Glasfasern sind u. a. in Ullmann's Encyclopaedia of Industrial Chemistry, 5. Auflage auf CD-ROM beschrieben (Stichwort: Fibres). Geeignete Glasfasern umfassen jene, die aus A-Glas, E-Glas, S-Glas, C-Glas, T-Glas oder R-Glas hergestellt wurden.

Die Glasfasern haben vorzugsweise einen Durchmesser im Bereich von 5 bis 20 µm, besonders bevorzugt von 8 bis 18 µm und ganz besonders bevorzugt von 10 bis 15 µm.

Gemäß einem besonderen Aspekt der vorliegenden Erfindung können die Glasfasern eine Länge im Bereich von 6 mm bis 100 mm, bevorzugt im Bereich von 10 bis 75 mm und besonders bevorzugt im Bereich von 15 bis 60 mm aufweisen, ohne dass hierdurch eine Beschränkung erfolgen soll.

Das erfindungsgemäße Glasfaservlies weist eine Inhomogenität der Faserverteilung (Flächengewicht) über die Breite des Vlieses von weniger als 10%, vorzugsweise weniger als 5% auf. Die Standardabweichung der mittleren Flächengewichtsverteilung über die Breite des Vlieses beträgt vorzugsweise höchstens 5%, besonders bevorzugt höchstens 2,5%. Die Inhomogenität kann gemäß ISO 3374 bestimmt werden.

Das Flächengewicht des erfindungsgemäßen Glasfaservlieses liegt bevorzugt im Bereich von 600 bis 2000 g/m2, vorzugsweise im Bereich von 800 bis 1500 g/m2 und besonders bevorzugt im Bereich von 900 bis 1400 g/m2. Das Flächengewicht wird gemäß ISO 3374 bestimmt.

Das Glasfaservlies der vorliegenden Erfindung weist vorzugsweise eine Festigkeit im Bereich von 10 N bis 200 N auf, bevorzugt von 20 N bis 150 N und besonders bevorzugt von 25 N bis 100 N auf. Die Festigkeit kann gemäß ISO 3342 bestimmt werden und bezieht sich auf jeweils 5 cm Probenbreite.

Die Festigkeit des Glasfaservlieses kann durch das Verfahren zur Herstellung des Glasfaservlieses erzielt werden. Darüber hinaus kann die Festigkeit durch mechanische Verfahren oder durch Verwendung von Bindemitteln erhöht werden. So kann die Festigkeit mechanisch durch einen Nadelstuhl erhöht werden.

Bevorzugte Bindemittel umfassen thermoplastische Kunststoffe und/oder Reaktionsharze, die bei Erwärmung vernetzte Strukturen bilden. Gemäß einem besonderen Aspekt der vorliegenden Erfindung kann das zur Verfestigung des Glasfaservlieses verwendete Bindemittel so gewählt werden, dass das Bindemittel einem Reaktionsharzsystem löslich ist.

Zu den bevorzugten thermoplastischen Kunststoffen, die in den Bindemitteln enthalten sind, gehören unter anderem Polyolefine, beispielsweise Polypropylen, Polyester, beispielsweise Polyethylenterephthalat oder Polybutylenterephthalat, Polyvinylacetat und partiell hydrolisiertes Polyvinylacetat, Polyvinylchlorid, Polyalkyl(meth)acrylate, wobei der Alkoholrest der (Meth)acrylatgruppen bevorzugt 1 bis 10 Kohlenstoffatome umfasst, wie beispielsweise Polymethylmethacrylat, Polyethylmethacrylat, Acrylnitrylpolymere, Polyvinylalkohole, Polyvinylpyrrolidone, Styrolpolymere, Polyamide, insbesondere Nylon, , Copolymere, die von zwei oder mehr der zuvor genannten Kunststoffe abgeleitet sind, sowie Mischungen dieser Kunststoffe. Der Ausdruck (Meth)acrylat umfasst Methacrylat, Acrylat sowie Mischungen von Methacrylat und Acrylat.

Zu den Reaktionsharzen, die in den Bindemitteln enthalten sind, gehören insbesondere ungesättigte Polyesterharze.

Die Kunststoffe können bekannte funktionelle Gruppen aufweisen. Hierzu gehören insbesondere Säuregruppen und Säureanhydridgruppen. Diese Gruppen können bei der Herstellung der zuvor genannten Kunststoffe durch Copolymerisation in den Kunststoff eingebracht werden.

Bevorzugte Bindemittel sind Schmelzkleber, die einen geringen Gehalt an Lösungsmitteln aufweisen. Diese Bindemittel weisen daher im Allgemeinen besonders hohe Anteile der zuvor dargelegten Kunststoffe und/oder Reaktionsharze.

Die Kunststoffe werden den Glasfasern bevorzugt als Kunststofffasern beigefügt. Des Weiteren können die zuvor dargelegten Kunststoffe in das Glasfaservlies auch als Flocken, Granulat oder als Pulver eingefügt werden.

So können insbesondere ungesättigte Polyesterharze in Pulverform verwendet werden.

Bevorzugte Kunststofffasern weisen eine Länge im Bereich von 6 bis 75, besonders bevorzugt 18 bis 50 mm auf. Die Kunststofffasern weisen ein Längengewicht im Bereich von 2 bis 40 dtex, vorzugsweise 3 bis 30 dtex und besonders bevorzugt 4 bis 7 dtex auf.

Des Weiteren können die Glasfasern bekannte Additive aufweisen. Beispielsweise können die Glasfasern bekannte Schlichtemittel (sizing agents) umfassen, mit denen die Hafteigenschaften der Glasfasern verändert werden können.

Vorzugsweise umfasst das Glasfaservlies mindestens 50 Gew.-%, besonders bevorzugt mindestens 70 Gew.-% und ganz besonders bevorzugt mindestens 90 Gew.-% anorganisches Glas.

Vorzugsweise umfasst das Glasfaservlies 0,1 Gew.-% bis 10Gew.-% , besonders - besonders bevorzugt 0,2 Gew.-% bis 5 Gew.-% und ganz besonders bevorzugt 0,3 Gew.-% bis 2 Gew.-% Bindemittel, bezogen auf das Gewicht des Glasfaservlieses. Das Gewicht bezieht sich auf das Trockengewicht des Bindemittels, falls das Bindemittel in Lösung oder als Suspension eingebracht wird.

Die Glasfasern liegen vorzugsweise im Glasfaservlies in Form von Bündeln vor. Bündel bedeutet, dass die Glasfasern in Längsrichtung eine gewisse Ordnung aufweisen. Vorzugsweise weisen die Bündel 50 - 1000, besonders bevorzugt 100 bis 500 Glasfasern und besonders bevorzugt 200 bis 300 Glasfasern auf. Diese Werte beziehen sich auf einen numerischen Mittelwert bezogen auf das Glasfaservlies. Hierbei gehört eine Glasfaser zu einem Bündel falls mindestens 50% der Länge der Glasfaser in Längsrichtung ausgerichtet ist und mit weiteren Glasfasern des Bündels über diese Länge in Kontakt steht.

Vorzugsweise liegen mindestens 50 Gew.-%, besonders bevorzugt mindestens 70 Gew.-% der Glasfasern, bezogen auf das Gewicht der Glasfasern, in dem Glasfaservlies in Form von Bündeln vor.

Die Glasfaserbündel, auch Glasfaserstränge genannt, weisen vorzugsweise einen Titer im Bereich von 20 bis 200 tex, besonders bevorzugt 30 bis 160 tex und ganz besonders bevorzugt im Bereich von 40 bis 120 tex auf.

Gemäß einem besonderen Aspekt der vorliegenden Erfindung lösen sich Bündel bei einer mechanischen Beanspruchung teilweise in Fasern auf, falls das Glasfaservlies in einer Harzmatte eingebettet ist. Diese Eigenschaft kann durch Verwendung von Additiven oder Präparationen eingestellt werden, die auf die Oberfläche der Glasfasern aufgetragen werden.

Die Herstellung der erfindungsgemäßen Glasfaservliese kann durch an sich bekannte Verfahren erfolgen. Bevorzugt erfolgt die Herstellung durch trockene Verfahren zur Herstellung von Vliesen, insbesondere durch Kardieren (carding) oder durch Verfahren bei denen die Fasern durch Luftströme zu Vliesen geformt werden (air laid). Beide Verfahren sind an sich bekannt und beispielsweise in Ullmann's Encyclopaedia of Industrial Chemistry, 5. Auflage auf CD-Rom dargelegt (Stichwort: non-woven fabrics). Des Weiteren werden diese Verfahren in US 2005/0082721 dargestellt.

Bevorzugte Vorrichtungen zur Herstellung der Glasfaservliese durch Air-Laid-Verfahren werden in WO 99/36622, WO 99/36623 und WO2005/044529 beschreiben.

Die Einstellung der einzelnen Verfahrensparameter, beispielsweise der Luftdruck bzw. die Luftgeschwindigkeit bei den Air-Laid -Verfahren oder beispielsweise die Beschaffenheit der Walzen bei den Kardier-Verfahren, können leicht eingestellt werden, da diese Verfahren sowie Vliese, die mit diesen Verfahren hergestellt wurden, seit langem bekannt sind.

Die erfindungsgemäßen Glasfaservliese können insbesondere zur Herstellung von Harzmatten eingesetzt werden. Harzmatten umfassen neben dem Glasfaservlies mindestens eine härtbare Verbindung.

Zur Herstellung der erfindungsgemäßen Harzmatten kann jedes Reaktionsharz verwendet werden, welches üblicherweise auf dem Gebiet der SMC oder Prepreg Technologie eingesetzt wird. Derartige Reaktionsharze sind unter anderem ausführlich in Ullmann's Encyclopaedia of Industrial Chemistry, 5. Auflage auf CD-Rom dargelegt

Hierzu gehören insbesondere Epoxidharze, ungesättigte Polyesterharze, Vinylesterharze, Polyimidharze, Cyanatesterharze, Phenolharze, Melaminharze und Bismaleinimidharze.

Des Weiteren können die zuvor genannten Harze auch als Mischungen eingesetzt werden, die zwei oder mehr dieser Harzsysteme umfassen.

Vorzugsweise können erfindungsgemäß Reaktionsharze auf Basis von ungesättigten Polyestern eingesetzt werden, die unter Anwendung von Polymerisation und Vernetzung zu duroplastischen Massen aushärten. Ungesättigte Polyesterharze enthalten als zusätzliche Komponenten vielfach copolymerisierbare Monomere, wie beispielsweise Styrol, alpha-Methylstyrol, Vinyltoluol, Methylmethacrylat als Lösungs- oder Verdünnungsmittel sowie bifunktionelle Monomere, u. a. Divinylbenzol, Diallylphthalat als Vernetzer.

Zur Härtung der zuvor dargelegten Reaktionsharzsysteme werden üblicherweise Katalysatoren eingesetzt. Hierbei werden die Katalysatoren entsprechend dem eingesetzten Reaktionsharz ausgewählt.

Ungesättigte Polyesterharze oder Vinylesterharze können im Allgemeinen durch Polymerisationsinitiatoren, wie beispielsweise Peroxide gehärtet werden. Beispielhaft genannt seien t-Butyl-per-2-ethylhexanoat, Bis-(4-t-butylcyclohexyl)-peroxydicarbonat, Benzylperoxid und Methylisobutylketonperoxid. Des Weiteren können diese Härter als Mischungen eingesetzt werden.

Für Systeme, die Acrylatfunktionen enthalten, können UV-Photoinitiatoren eingesetzt werden, wie jene, die insbesondere eine Lewis- oder Brøstedtsäure durch Bestrahlung freisetzen. Beispiele umfassen Triarylsulfoniumsalze, welche Anionen, wie beispielsweise Tetrafluorborat oder Hexafluorborat, besitzen.

Gemäß einem besonderen Aspekt der vorliegenden Erfindung ist das zur Verfestigung des Glasfaservlieses verwendete Bindemittel in dem Reaktionsharzsystem löslich. Hierdurch kann überraschend die Fließfähigkeit der erhaltenen Harzmatten verbessert werden.

Des Weiteren können die Reaktionsharze Additive umfassen, wie beispielsweise Pigmente, UV-Stabilisatoren, Entformungsmittel, Flammschutzmittel und schwindungskompensierende Additive.

Zu den schwindungskompensierenden Additiven gehören u. a. gesättigte Polyester, Polyurethane, Polyvinylacetat, Polymethylmethacrylat, Polystyrol oder Styrol-Butadien-Copolymere oder Mischungen dieser Additive.

Zu den erfindungsgemäßen Harzmatten gehören u. a. Sheet-Moulding-Compounds (SMC), die einen relativ hohen Anteil an Füllstoffen, Verdickungsmitteln und Pigmenten aufweisen, sowie Prepregs, die einen geringeren Anteil an Füllstoffen, Verdickungsmitteln und Pigmenten aufweisen.

SMC ist die englische Bezeichnung für eine Harzmatte nach DIN 16913. Eine typische SMC Rezeptur umfasst ca. 15 bis 45 Gew.-% Reaktionsharz, 15 bis 45 Gew.-% Füllstoffe und 15 bis 45 Gew.-% Glasfaservlies. Darüber hinaus kann die SMC Rezeptur weitere Zusatzstoffe umfassen, wie beispielsweise Farbpigmente, Härter, Dispergierhilfsmittel, Tixotropiermittel, Eindickhilfsmittel, Haftmittel und/oder Trennmittel.

Als Eindickmittel können Alkali- und/oder Erdalkalioxide bzw. Hydroxide und/oder Isocyanate verwendet werden.

Die Herstellung von SMCs kann auf bekannte Weise erfolgen, wobei jedoch die Zugabe der Verstärkungsfasern in Form von mindestens einem erfindungsgemäßen Glasfaservlies erfolgt.

Gemäß einem bevorzugten Verfahren kann hierbei zunächst auf eine Trägerfolie eine Reaktionsharzmischung aufgetragen werden, die neben dem Reaktionsharz weitere Additive und Füllstoffe umfassen kann. Von einer Trägerrolle wird mindestens eine Schicht eines erfindungsgemäßen Glasfaservlieses abgerollt und auf die Harzmatrix aufgebracht. In einer nächsten Stufe wird zunächst auf eine zweite Trägerfolie eine Schicht Reaktionsharz aufgetragen, die ebenfalls Additive, beispielsweise Füllstoffe umfassen kann. Diese zweite Trägerfolie wird von oben auf das Glasfaservlies aufgebracht, wobei die mit Reaktionsharz versehene Oberfläche der Trägerfolie in Richtung des Glasfaservlieses zeigt. Anschließend wird dieses Gebilde durch eine Imprägnierstrecke transportiert, die durch Druck- und Walkbewegungen eine Benetzung der Fasern mit der Harzmatrix bewirkt. Am Ende der Maschine wird das Gebilde auf Rollen gewickelt.

Üblich wird ein Reifeprozess durchgeführt, der auf chemische und/oder physikalische Weise eingeleitet werden kann. Vorzugsweise dauert der Reifeprozess 0,5 bis 14 Tage, besonders bevorzugt 1 bis 7 Tage. Nach diesem Reifeprozess kann das SMC weiterverarbeitet werden. Nach Abziehen der Trägerfolien wird das SMC üblicherweise in beheizten Stahlwerkzeugen zu Formteilen verarbeitet bzw. verpresst.

Eine erfindungsgemäße Harzmatte weist vorzugsweise eine Dicke im Bereich von 1 bis 20mm, besonders bevorzugt im Bereich von 2 bis 10mm auf. Das Flächengewicht bevorzugter Harzmatten liegt vorzugsweise im Bereich von 500 bis 6000 g/m2, besonders bevorzugt im Bereich von 1000 bis 4000 g/m2.

Die Harzmatten der vorliegenden Erfindung weisen vorzugsweise eine hohe Fließfähigkeit auf. Hierdurch entfällt die Notwendigkeit die Harzmatte genau in die Form einzulegen. Vorzugsweise ist die Fließfähigkeit der Harzmatte so hoch, dass die Pressform vorzugsweise nur zu 25% bis 80%, besonders bevorzugt nur zu 30 bis 49 % abgedeckt werden muss.

Die erfindungsgemäßen Harzmatten sind vielfältig einsetzbar. Sie können insbesondere zur Herstellung von faserverstärkten Bauteilen dienen, die gute Temperatur- und Lösungsmittelbeständigkeit sowie hohe Steifigkeit, Festigkeit und Schlagzähigkeit auch bei niederen Temperaturen bieten sollen.

Die aus den Harzmatten erhältlichen Bauteile können vorzugsweise eine Class-A Oberflächengüte aufweisen.

Die erfindungsgemäßen Harzmatten sind daher besonders geeignet für Automobilteile. Auch sind die Harzmatten aufgrund ihrer guten mechanischen Eigenschaften ein ideales Material für die Elektro-, Möbel- und Sanitärindustrie.

Die Oberfläche der aus den Harzmatten hergestellten Teile können durch bekannte Mittel bearbeitet und veredelt werden.

Beispielsweise können Folien oder Feinschichtharze vor oder nach der Härtung der Harzmatten aufgebracht werden.

Beispielsweise kann die Harzmatte mit einer Schicht aus thermoplastischem Polymer versehen werden, um nach der Formgebung eine hervorragende Oberflächenqualität zu erhalten. Derartige Composite-Materialien sind beispielsweise in EP 0 361 823 sowie EP 1 322 460 beschrieben.

## Patentansprüche

1. Glasfaservlies umfassend geschnittene Glasfasern, **dadurch gekennzeichnet, dass** das Glasfaservlies eine Inhomogenität von 2,5% oder weniger, ein Flächengewicht von 600g/m2 oder höher und eine Festigkeit von mindestens 10 N aufweist.

2. Glasfaservlies gemäß Anspruch 1, **dadurch gekennzeichnet, dass** die Glasfasern in Bündeln vorliegen.

3. Glasfaservlies gemäß Anspruch 2, **dadurch gekennzeichnet, dass** die Bündel bei einer mechanischen Beanspruchung teilweise in Glasfasern aufgelöst werden können.

4. Glasfaservlies gemäß Anspruch 2 oder 3, **dadurch gekennzeichnet, dass** die Bündel 200 bis 300 Glasfasern aufweisen.

5. Glasfaservlies gemäß mindestens einem der vorhergehenden Ansprüche, **dadurch gekennzeichnet, dass** das Glasfaservlies mindestens ein Bindemittel aufweist.

6. Glasfaservlies gemäß Anspruch 5, **dadurch gekennzeichnet, dass** das Bindemittel ein Schmelzkleber darstellt.

7. Glasfaservlies gemäß mindestens einem der vorhergehenden Ansprüche, **dadurch gekennzeichnet, dass** das Glasfaservlies Kunststofffasern aufweist.

8. Glasfaservlies gemäß mindestens einem der vorhergehenden Ansprüche, **dadurch gekennzeichnet, dass** die Glasfasern eine Länge im Bereich von 6 mm bis 75 mm aufweisen.

9. Glasfaservlies gemäß mindestens einem der vorhergehenden Ansprüche 2 bis 8, **dadurch gekennzeichnet, dass** die Bündel einen Titer m Bereich von 30 bis 160 tex aufweisen.

10. Harzmatte umfassend mindestens ein Glasfaservlies gemäß mindestens einem der Ansprüche 1 bis 9.

11. Harzmatte gemäß Anspruch 10, **dadurch gekennzeichnet, dass** die Harzmatte mindestens ein Reaktionsharz umfasst.

12. Harzmatte gemäß Anspruch 11, **dadurch gekennzeichnet, dass** die härtbare Verbindung ein ungesättigtes Polyesterharz darstellt.

13. Harzmatte gemäß mindestens einem der Ansprüche 10 bis 12, **dadurch gekennzeichnet, dass** die Harzmatte ein Flächengewicht im Bereich von 500 bis 6000 g/m2 aufweist.

14. Harzmatte gemäß mindestens einem der Ansprüche 10 bis 13, **dadurch gekennzeichnet, dass** das zur Herstellung der Harzmatte Glasfaservlies ein Bindmittel umfasst, welches in dem zur Herstellung der Harzmatte verwendeten Reaktionsharz löslich ist.

15. Harzmatte gemäß mindestens einem der Ansprüche 10 bis 14, **dadurch gekennzeichnet, dass** die Fließfähigkeit der Harzmatte so hoch ist, dass eine Pressform nur zu 30 bis 49 % abgedeckt werden muss.

16. Verfahren zur Herstellung von Glasfaservliesen gemäß mindestens einem der Ansprüche 1 bis 9, **dadurch gekennzeichnet, dass** Glasfasern durch Kardier-Verfahren zu einem Vlies geformt werden.

17. Verfahren zur Herstellung von Glasfaservliesen gemäß mindestens einem der Ansprüche 1 bis 9, **dadurch gekennzeichnet, dass** Glasfasern durch Air-Laid-Verfahren zu einem Vlies geformt werden.

18. Verwendung von Glasfaservliesen gemäß mindestens einem der Ansprüche 1 bis 9 zur Herstellung von Harzmatten.

19. Verwendung gemäß Anspruch 18, **dadurch gekennzeichnet, dass** die Harzmatte ein Sheet Mouldung Compound (SMC) ist.
